# EUROPÄISCHE PATENTSCHRIFT

(11) **EP 0 899 069 B1**
(45) Veröffentlichungstag und Bekanntmachung des Hinweises auf die Patenterteilung: **25.01.2006**
(21) Anmeldenummer: 98115798.5
(22) Anmeldetag: 21.08.1998
(51) Int. Cl.: B27B 1/00, B23D 45/10

(54) **Verfahren und Vorrichtung zur Weiterverarbeitung von unbesäumten Rohbrettern**
Method and device for processing waney boards
Procédé et dispositif pout le travail des planches brutes

(30) Priorität: 26.08.1997 DE 19737060
(43) Veröffentlichungstag der Anmeldung: 03.03.1999
(73) Patentinhaber: Schlapp, Wilhelm, 61267 Neu-Anspach (DE)
(72) Erfinder: Schlapp, Wilhelm, 61267 Neu-Anspach (DE)
(74) Vertreter: Jochem, Bernd

(56) Entgegenhaltungen:
- FR-A- 2 237 735
- US-A- 3 634 975
- US-A- 3 931 501
- US-A- 4 239 072
- US-A- 4 691 751
- PATENT ABSTRACTS OF JAPAN vol. 013, no. 519 (M-895), 20. November 1989 (1989-11-20) -& JP 01 210301 A (FUJI KOGYO KK), 23. August 1989 (1989-08-23)

## Beschreibung

Die Erfindung betrifft ein Verfahren zur Weiterverarbeitung von unbesäumten Rohbrettern, wobei vor dem Zerlegen eines Rohbretts in längliche, rechteckige Teilstücke ein durch einen Rechner auszuwertendes Bild des Rohbretts aufgenommen und unter Berücksichtigung seiner Maße und Materialeigenschaften ein Schnittmuster berechnet wird, mit dessen Daten eine die Teilstücke markierende oder aussägende maschinelle Vorrichtung gesteuert wird, sowie eine Vorrichtung zur Durchführung eines solchen Verfahrens.

Bei der Weiterverarbeitung von unbesäumten Rohbrettern zu sog. Kanteln, d.h. ausgesägten, noch zu hobelnden Werkstükken, z.B. Stuhlbeinen, wird in der Praxis im allgemeinen so vorgegangen, daß die langen Rohbretter mehrmals quer durchtrennt werden, um Teilstücke mit der jeweils gewünschten Länge der Kanteln zu erhalten, und dann z.B. mit einer Mehrblattsäge durch Längsschnitte der Teilstücke die Kanteln erzeugt werden. Da die Rohbretter teilweise gekrümmt oder gewölbt sind und Fehler, wie z.B. Risse, Löcher, Ast-und/oder Herzstellen aufweisen, ist bei dem herkömmlichen Verfahren ein verhältnismäßig großer Prozentsatz der auf diese Weise produzierten Kanteln Ausschuß. Aus der US-A-4,691,751 ist ein derartiges Verfahren bekannt, bei dem Fehler in den durch Querteilung gebildeten Teilstücken von vornherein berücksichtigt werden.

Die US-A-3,931,501 beschreibt eine Vorrichtung und ein Verfahren, um ein bereits ausgesägtes, langes, rechteckiges Brett mittels automatischer Bildverarbeitung in zwei Reihen schmalerer, paralleler Bretter unterschiedlicher Länge und Breite aufzuteilen, wobei Fehler im Holz ausgespart werden. Darüber, nach welcher Regel das lange Brett aus einem unregelmäßigen, unbesäumten Rohbrett ausgesägt wird, ist nichts ausgesagt. Auf jeden Fall hat dieses Verfahren den Nachteil, daß viel fehlerfreies Holz aus den seitlichen Randbereichen des unbesäumten Rohbretts verloren geht, während Fehler im Herzbereich zunächst mit in das lange, rechteckige Brett übernommen werden und die Ausbeute weiter schmälern. Außerdem sind zwei längere Arbeitsvorgänge erforderlich, um zunächst unter Berücksichtigung der unregelmäßigen Ränder und der Fehler in den Randbereichen des unbesäumten Rohbretts ein möglichst langes und möglichst breites rechteckiges Brett auszusägen und um dieses dann in einem zweiten Schritt derart in kleinere parallele Bretter oder Kanteln aufzuteilen, daß dabei die Fehler, die aus dem mittleren Bereich des Rohbretts stammen, ausgespart werden.

Aus der DE-PS 35 17 714 sind ein Verfahren und eine Sägevorrichtung bekannt, mit deren Hilfe der Ausschuß verringert und die Ausnutzung der Rohware verbessert werden können. Man bedient sich dazu ebenfalls der automatischen Bildverarbeitung und eines Roboters. Zunächst wird das Rohbrett von einer oder mehreren Kameras aufgenommen. Dabei werden die Maße und alle Unregelmäßigkeiten und Fehler erfaßt. Anschließend erfolgt mittels eines Rechners, dem man auch die Maße der gewünschten Kanteln eingegeben hat, die Berechnung eines individuellen Schnittmusters für jedes Rohbrett, bei dem Fehlstellen ausgespart werden und der Rest der Fläche so auf die verschiedenen Kantelgrößen aufgeteilt wird, daß eine optimale Ausnutzung des Materials erreicht wird. Nachfolgend ergreift ein Roboter, der entsprechend dem berechneten Schnittmuster gesteuert wird, das Rohbrett und legt es jeweils so auf einen Sägetisch, daß eine gleichbleibend hin und her bewegte Kreissäge nacheinander alle Längs- und Querschnitte im jeweils richtigen Winkel zur Längsmittellinie des Rohbretts ausführt, um sämtliche Kanteln einzeln auszusägen. Infolge der Vielzahl der notwendigen Positionierbewegungen des zunächst sehr großen und schweren Rohbretts relativ zur Kreissäge dauert das Aussägen der Vielzahl der Kanteln sehr lange, und wenn eine größere Fertigungskapazität gefordert wird, braucht man einen hohen Kapitaleinsatz für mehrere parallel arbeitende Roboter und Sägen.

Der Erfindung liegt die Aufgabe zugrunde, ein Verfahren und eine Vorrichtung der eingangs genannten Art zu schaffen, die ebenfalls eine gute Ausbeute des Materials und eine niedrige Ausschußquote gewährleisten, aber eine wesentlich schnellere und daher kostengünstigere Verarbeitung der Rohware gestatten als bei dem zuletzt geschilderten Verfahren.

Vorstehende Aufgabe wird verfahrensmäßig dadurch gelöst, daß die auszusägenden Teilstücke mit Bezug auf das Rohbrett zwei unregelmäßige Längsreihen bilden, indem sie jeweils mit ihren Längskanten angenähert parallel zum benachbarten Abschnitt der unbesäumten Längskante des Rohbretts liegen und mit individuellen Längen und Breiten die nutzbare Fläche des Rohbretts angenähert überdecken..

Um auch herkömmlich ausgestatteten holzverarbeitenden Betrieben, die über keine mit den Daten der Schnittmuster steuerbare Kreissäge verfügen, den Nutzen der Erfindung zugute kommen zulassen, besteht die Möglichkeit, zunächst nur das berechnete Schnittmuster der beiden unregelmäßigen Reihen von Teilstücken auf den Rohbrettern zu markieren. Dann können die Teilstück z.B. durch manuelle Führung der Säge oder der Rohbretter ausgeschnitten und in einem anschliessenden Arbeitsschritt zu Kanteln weiterverarbeitet werden. Auch in diesem Fall erreicht man mit wenigen, einfachen Bewegungen des Rohbretts relativ zur Säge eine Aufteilung in fehlerfreie Teilstücke und sehr geringen Abfall.

Das bessere Material befindet sich normalerweise im äußeren Bereich der Rohware. Daher ist gemäß der Erfindung vorgesehen, daß auszusägende rechteckige Teilstücke jeweils mit ihren Längskanten angenähert parallel zum benachbarten Abschnitt der Längskante des Rohbretts liegen. Es wird dabei in Kauf genommen, daß die Innenkanten nebeneinander liegender Teilstücke nicht parallel liegen, so daß sie auch nicht durch parallele Sägeblätter geschnitten werden können. Dennoch ist das Aussägen der Teilstücke, die später auf einer Mehrblattsäge weiterverarbeitet werden können, einfach, weil es ausreicht, bei der Verarbeitung der Rohware außer Querschnitten nur die beiden Längsschnitte zur Erzeugung der inneren (näher an der Längsmittellinie des Rohbretts liegenden) Längskanten der Teilstücke auszuführen.

Die Anpassung der Lage der Teilstücke an den unregelmäßigen Rand der Rohbretter ist einer der Gründe, warum die beiden Längsreihen der Teilstücke unregelmäßig sind. Weitere Gründe sind die unterschiedlichen Längen, Breiten und Längsabstände der rechteckigen Teilstücke, wobei gelegentlich auch andere Formen, z.B. eine für bestimmte Treppenstufen benötigte Trapezform, hergestellt werden können. Wie dieses Beispiel zeigt, muß auch nicht notwendigerweise jedes Teilstück zu Kanteln weiterverarbeitet werden. Manche Teilstükke sind selbst schon Kanteln, die nur noch gehobelt zu werden brauchen. Da jedoch die Rohbretter in der Regel eine Breite von etwa 30 bis 60 cm haben und der Bedarf an kleinen Massivholzteilen wesentlich größer ist als an großflächigen Werkstücken, wird in der Praxis auf das Aussägen der Teilstücke aus der Rohware meistens ein weiterer Arbeitsschritt folgen, bei dem diese Teilstücke in kleinere Kanteln aufgeteilt werden.

Die Verarbeitungskapazität hängt davon ab, wieviele Sägen zum Einsatz gebracht werden. Schon mit einer einzigen Säge läßt sich das erfindungsgemäße Verfahren realisieren, wenn das Kreissägeblatt um eine senkrechte Achse schwenkbar, mit Bezug auf die Vorschubrichtung des Rohbretts beim Sägevorgang seitlich verschiebbar sowie unter die Oberfläche des Sägetischs absenkbar und während des Sägevorgangs wieder nach oben ausfahrbar ist. Es stellt im Vergleich zu dem Verfahren gemäß DE-PS 35 17 714 eine wesentliche Vereinfachung dar, daß selbst in dieser kostengünstigsten Version mit nur einer gesteuert bewegbaren Kreissäge das Rohbrett nur geradlinig in Längsrichtung geführt und bewegt zu werden braucht. Bereits wenn zwei derart gesteuert bewegbare Kreissägen zum Einsatz kommen, brauchen die Rohbretter nur noch in einer Richtung geradlinig vorgeschoben zu werden. In diesem Fall werden nur die inneren Längskanten der Teilstücke geschnitten. Diese behalten eine unbesäumte Längskante. Der zur Begradigung dieser Kante erforderliche Längsschnitt wird im nachfolgenden Arbeitsgang auf der Mehrblattsäge ausgeführt.

Die Kreissägeblätter, mit denen die Längskanten der Teilstücke geschnitten werden, müssen auf jeden Fall unter die Oberfläche des Sägetischs zurückgezogen werden können, um einen Schnitt an einer bestimmten Stelle zu beenden und anschließend das Rohbrett weiter vorschieben zu können. Unter dieser Voraussetzung empfiehlt es sich, die Rohbretter nach Beendigung des Sägens einer Längskante eines Teilstücks bei nach unten zurückgezogenem Sägeblatt soweit vorzuschieben (während ggf. eine zweite Kreissäge die Längskante eines Teilstücks der anderen Längsreihe sägt), bis sich die Drehachse des Kreissägeblatts etwa im Abstand ihres Radius hinter dem vorderen Eckpunkt der zu schneidenden Längskante des nächsten Teilstücks befindet. Der vordere Abschnitt dieser Längskante wird während des Hochfahrens des Kreissägeblatts über die Oberfläche des Sägetischs erzeugt. Dabei wird zweckmäßigerweise so verfahren, daß während und unmittelbar nach einem Querschnitt zur Erzeugung des vorderen Endes eines Teilstücks das Rohbrett ortsfest gehalten wird, bis durch vertikale Bewegung eines rotierenden Kreissägeblatts eine vordere Ecke des Teilstücks erzeugt ist. Durch das Hochfahren und Zurückziehen der Sägeblätter nach unten am vorderen bzw. hinteren Ende der zu schneidenden Längskanten der Teilstücke wird außerdem vermieden, daß sich bei konvergierenden Längskanten zweier nebeneinander liegender Teilstücke die Bahnen der beiden Sägen schneiden, wobei es zur Kollision kommen würde.

Eine zur Durchführung des vorgeschlagenen Verfahrens geeignete Vorrichtung besitzt eine optische Einrichtung zur bildlichen Erfassung eines Rohbretts, einen Rechner zur Berechnung eine Schnittmusters und eine mechanische Einrichtung zum Markieren des Schnittmusters oder zum Aussägen von Teilstücken entsprechend dem Schnittmuster und ist dadurch gekennzeichnet, daß die auszusägenden Teilstücke mit Bezug auf das Rohbrett zwei unregelmäßige Längsreihen bilden und mit individuellen Längen und Breiten die nutzbare Fläche des Rohbretts angenähert überdecken.

In der einfachsten praktischen Ausführung gehören zu der Einrichtung zum Sägen eine Fördereinrichtung zum geradlinigen Vorschub eines Rohbretts in Längsrichtung und wenigstens ein Sägenschlitten, der gesteuert quer zur Vorschubrichtung verfahrbar und um eine senkrechte Achse schwenkbar ist, und an dem wenigstens eine Kreissäge während des Sägens vertikal bewegbar gelagert ist. Im Falle einer einzigen Kreissäge führt diese abwechselnd Längs- und Querschnitte aus. Wenn dabei das Rohbrett in Vorschubrichtung ausschließlich vorgeschoben werden soll, wird mit der einzigen vorhandenen Säge auch nur ein einziger Längsschnitt ausgeführt, der jeweils der inneren Längskante des zuerst endenden Teilstücks der beiden in Querrichtung des Rohbretts nebeneinander liegenden Teilstücke folgt. Das Herz des Rohbretts bleibt somit an dem daneben liegenden Teilstück und wird während des nachfolgenden Arbeitsgangs auf einer Mehrblattsäge abgeschnitten. Dies setzt allerdings eine besondere Positionierung und Führung des Teilstücks auf der Mehrblattsäge voraus.

Vorteilhafter ist es, wenn zum Aussägen der Teilstücke jeder der beiden Längsreihen je ein Sägenschlitten mit wenigstens einer Kreissäge vorhanden ist, weil dann trotz Vorschubs des Rohbretts nur in einer Richtung das Herz abgeschnitten wird und alle Teilstücke eine gerade Längskante haben, an der sie auf der Mehrblattsäge positioniert und/oder geführt werden können. In weiterer bevorzugter Ausgestaltung der Erfindung sind an dem einzigen vorhandenen oder an beiden Sägenschlitten jeweils wenigstens eine Kreissäge zur Ausführung von Längsschnitten vertikal bewegbar und wenigstens eine weitere Kreissäge zur Ausführung von Querschnitten vertikal und/oder horizontal bewegbar gelagert. Damit spart man Zeit, weil die beiden Kreissägen teilsweise gleichzeitig arbeiten können und die großen Schwenkbewegungen um etwa 90°, die eine einzelne Säge ausführen muß, entfallen.

Die Arbeitsgeschwindigkeit und damit die Produktionskapazität lassen sich darüber hinaus noch weiter steigern, wenn an jedem der beiden Sägenschlitten eine Kreissäge für Längsschnitte und in Vorschubrichtung unmittelbar vor und hinter dieser je eine Kreissäge für Querschnitte gelagert sind, und in der letzten Ausbaustufe können an jedem der beiden Sägenschlitten zwei parallel angeordnete Kreissägen für Längsschnitte gelagert sein, deren Abstand einstellbar ist, so daß alle Längskanten der nebeneinander liegenden Teilstücke gleichzeitig erzeugt werden. Eine Steigerung der Arbeitsgeschwindigkeit ist aber auch dann noch möglich, indem mit sog. "fliegenden" Quersägen gearbeitet wird. Dabei ist die Kreissäge bei der Ausführung von Querschnitten längs des Sägenschlittens in Vorschubrichtung zusammen mit dem Rohbrett verfahrbar.

Ein Ausführungsbeispiel der Erfindung wird nachstehend anhand der Zeichnungen näher erläutert. Es zeigen:
- Fig. 1 und 2: Draufsichten zweier Rohbretter mit einem darauf markierten Schnittmuster zur Gewinnung von Teilstücken und
- Fig. 3: eine vereinfachte Draufsicht auf eine Sägevorrichtung zum Ausschneiden der Teilstücke aus Rohbrettern nach Fig. 1 und 2.

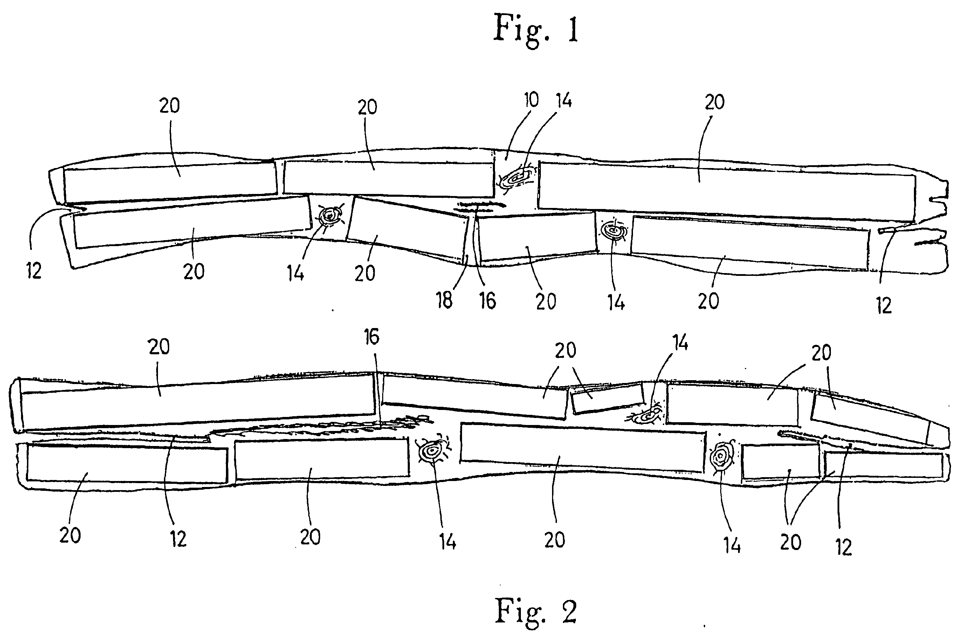

In Fig. 1 und 2 sind zwei unterschiedliche Rohbretter 10 dargestellt, die im Beispielsfall eine Länge von etwa 3,5 m und eine unregelmäßige Breite von etwa 30 bis 60 cm haben. Solche Rohware ist unterschiedlich gekrümmt und verzogen und hat außerdem an verschiedenen Stellen Fehler, wie z.B. Löcher oder Risse 12, Astaugen 14 und sog. Herz 16. Beim automatischen optischen Vermessen der Rohbretter werden deren Fehler und die Maserung mit erfaßt, und dann wird durch einen Rechner aus den Maßen der zu produzierenden Kanteln und des jeweiligen Rohbretts unter Berücksichtigung von dessen Fehlern 12, 14, 16 ein Schnittmuster berechnet, welches die nutzbare, fehlerfreie Fläche vom Abfall 18 trennt und in Teilstücke 20 gliedert, die geeignete Längen- und Breitenmaße haben, um entweder einteilig zu einem verhältnismäßig großen Fertigteil, z.B. einer Treppenstufe, gehobelt oder in einem nachfolgenden Arbeitsgang z.B. auf einer Mehrblattsäge in kleinere Kanteln zerlegt werden.

Wie Fig. 1 und 2 zeigen, besteht die Besonderheit der Erfindung darin, daß die Rohbretter zur Gewinnung von Teilstücken 20 weder auf ganzer Breite durchtrennt noch gleich im ersten Arbeitsgang in eine Vielzahl kleiner Kanteln zerlegt werden. Es sind vielmehr nur zwei unregelmäßige Längsreihen von Teilstücken unterschiedlicher Längen, Breiten und evtl. auch geometrischer Formen vorgesehen. Im gezeigten Ausführungsbeispiel ist der häufigste Fall dargestellt, daß alle Teilstücke 20 Rechtecke sind. Sie liegen in der Regel zu beiden Seiten der natürlichen Längsmittellinie des Rohbretts, können aber auch stellenweise, wenn der mittlere Bereich fehlerfrei ist, sich darüber hinaus bis teilweise in die andere Bretthälfte hinein erstrecken. Im allgemeinen liegen die Längskanten der Teilstücke 20 parallel zu dem ihnen benachbarten Abschnitt der Längskante des Rohbretts, bilden also unterschiedliche Winkel mit Bezug auf eine gerade Linie, welche die Mitten der Endkanten eines Rohbretts verbindet. Dies hat zur Folge, daß das Sägeblatt der Kreissäge, mit der die Längskanten der Teilstücke 20 gesägt werden, unter dem jeweiligen Winkel schräg zur Vorschubrichtung eingestellt werden muß, wenn das Rohbrett längs der genannten geraden Mittellinie, die nicht mit der normalerweise gekrümmten natürlichen Mittellinie identisch ist, beim Sägevorgang zum Sägeblatt hin vorgeschoben wird. Eine weitere Folge der unregelmäßigen Lage der Teilstücke 20 in jeder Längsreihe besteht darin, daß sich während des Sägens einer Längskante der Abstand des Sägeblatts von der geraden Mittellinie ändert. Die Kreissäge muß also während des Schneidens quer zur Vorschubrichtung gesteuert verfahren werden. Dies ist unter Berücksichtigung der Vorschubgeschwindigkeit und der verhältnismäßig kleinen Winkel zwischen den Längskanten der Teilstücke 20 und der geraden Mittellinie ohne weiteres möglich.

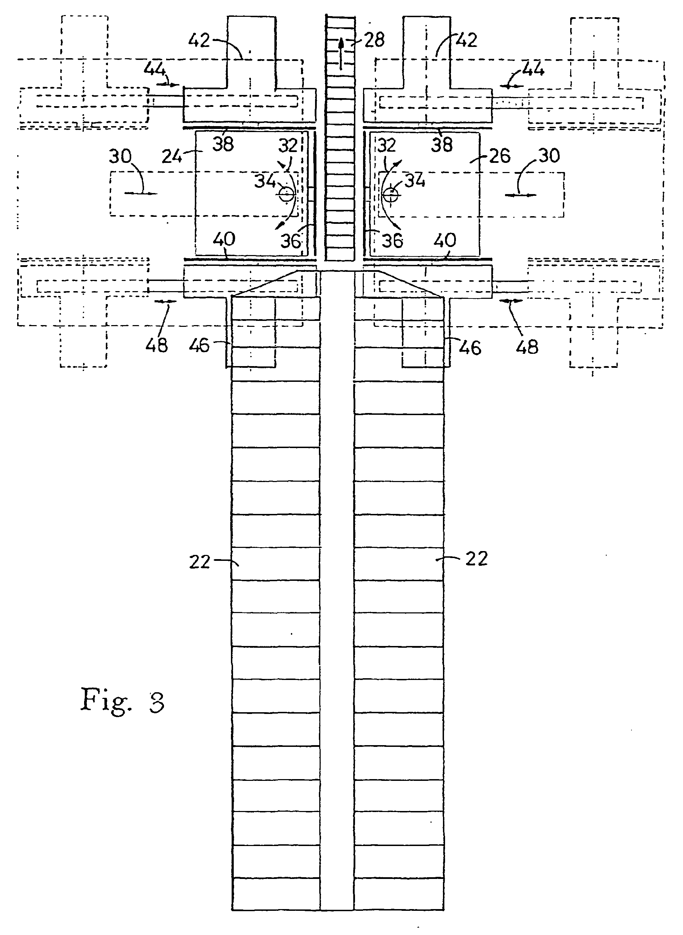

Fig. 3 zeigt in Draufsicht eine Sägevorrichtung zum Aussägen der Teilstücke 20 aus den Rohbrettern 10. Die Sägevorrichtung besteht im Beispielsfall aus einem Sägetisch 22, zwei Sägenschlitten 24 und 26 mit jeweils drei daran gelagerten Kreissägen und schließlich einer nicht gezeigten Vorschubeinrichtung herkömmlicher Art, welche die auf den Sägetisch 22 aufgelegten Rohbretter 10 den Kreissägen der Sägenschlitten 24, 26 zuführt. Eine weitere, bei 28 angedeutete Fördereinrichtung sorgt für die Abfuhr der beim Sägen entstehenden Späne und des Abfalls. Sie befindet sich unterhalb der Sägen.

Jeder der beiden Sägenschlitten 24 und 26 hat zwei gesteuerte Bewegungsantriebe. Einer dient zur Bewegung des jeweiligen Sägenschlittens quer zur Vorschubrichtung und ist durch einen Doppelpfeil 30 angedeutet. Der andere Antrieb, der jeweils durch einen bogenförmigen Doppelpfeil 32 angedeutet ist, dient zum Verschwenken des jeweiligen Sägenschlittens 24 bzw. 26 mitsamt den daran gelagerten Kreissägen um eine senkrechte Achse 34.

An jedem der beiden Sägenschlitten 24, 26 ist jeweils an der zueinander weisenden Seite ein durch einen nicht gezeigten Motor rotierend antreibbares Sägeblatt 36 drehbar gelagert. Außerdem sind die beiden Sägeblätter 36 unabhängig voneinander unter die Oberfläche des Sägetischs 22 zurückziehbar und wieder nach oben über die Sägetischfläche hinaus vorzuschieben. Weiterhin sind an jedem Sägenschlitten 24, 26 in Vorschubrichtung vor und hinter dem Sägeblatt 36 auf der in Vorschubrichtung nach vorn weisenden Seite, d.h. in Vorschubrichtung hinter dem Sägeblatt 36, quer zu diesem ein Sägeblatt 38 und auf der gegenüberliegenden Seite, d.h. in Vorschubrichtung vor dem Sägeblatt 36, ein ebenfalls quer zu diesem liegendes Sägeblatt 40 parallel zur Drehachse des Sägeblatts 36 verfahrbar gelagert. Die Verfahrantriebe der Sägeblätter 38 und der zugehörigen Drehantriebsmotoren 42 sind jeweils durch einen Doppelteil 44 angedeutet. Entsprechend sind die gegenüberliegenden Sägeblätter 40 und zugehörigen Drehantriebsmotoren 46 durch Antriebe, die durch Doppelpfeile 48 angedeutet sind, relativ zum Sägeblatt 36 quer verfahrbar. Fig. 3 zeigt die Sägeblätter 38, 40 in einer im wesentlichen bis an die Ebene des Kreissägeblatts 36 herangefahrenen, vorgeschobenen Stellung in ausgezogenen Linien und daneben gestrichelt in einer seitlich nach außen zurückgezogenen Stellung. Statt dieser Querbeweglichkeit könnten die Sägeblätter 38, 40 ebenso wie das Sägeblatt 36 auch in senkrechter Richtung zwischen einer unter die Oberfläche des Sägetischs zurückgezogenen Stellung und einer angehobenen Sägestellung verfahrbar sein.

In der nach innen gefahrenen, in ausgezogenen Linien dargestellten Lage bilden die Sägeblätter 38 und 40 jeweils zusammen mit dem Sägeblatt 36 rechte Winkel und in Draufsicht angenähert eine Ecke. Wenn die Sägeblätter ausreichend groß, z.B. mit 500 mm Durchmesser, bemessen sind und weit über die Oberfläche des Sägetischs 22 nach oben herausragen, brauchen sie nur die gezeigte Endstellung einzunehmen, um die inneren Ecken der Teilstücke 20 zu erzeugen. Daneben besteht die Möglichkeit, die inneren Ecken der Teilstücke 20 dadurch zu erzeugen, daß man mit den Sägeblättern 36, 38, 40 zeitlich nacheinander ein wenig über den zu erzeugenden Eckpunkt hinausfährt.

Die gezeigte Vorrichtung funktioniert wie folgt:

Das in Teilstücke zu zerlegende Rohbrett wird auf den Sägetisch 22 gelegt und durch die nicht gezeigte Vorschubeinrichtung geradlinig in Richtung seiner Längsmittellinie den Sägeblättern 36 zugeführt. Das Rohbrett wird bei nach unten zurückgezogenen Sägeblättern 36 soweit vorgeschoben, bis eines der Quersägeblätter 38 die in Vorschubrichtung vorderste Endkante eines Teilstücks 20 schneiden kann. Da normalerweise die Endkanten der Teilstücke 20 keinen rechten Winkel mit der geraden Mittellinie des Rohbretts bilden, dreht der Schwenkantrieb 32 den Sägenschlitten in diejenige Winkelstellung mit Bezug auf die Vorschubrichtung, daß die vorderste Endkante unter dem richtigen Winkel geschnitten wird. Während des Querschneidens, wie auch bei allen übrigen Querschnitten, wird das Rohbrett ortsfest gehalten. Noch während des Stillstands, aber vorzugsweise nach einem wenigstens teilweisen Rückzug des Sägeblatts 38 seitlich nach außen beginnt das Sägeblatt 36 bei laufendem Drehantrieb von unterhalb der Tischfläche hochzufahren. Dabei dringt es von unten in das Rohbrett ein und schneidet den vorderen Abschnitt der zu erzeugenden Längskante des Teilstücks 20. Um sie zu vollenden, wird anschließend das Rohbrett in Vorschubrichtung weiter vorgeschoben. Dieser Vorschubvorgang wird dann vorübergehend durch eine Stillstandsphase unterbrochen, wenn die vordere Endkante des in der anderen Seitenhälfte des Rohbretts benachbart liegenden Teilstücks 20 in diejenige Vorschubstellung kommt, in der das auf jener Seite arbeitende Sägeblatt 38 zum Einsatz gebracht wird. Dann folgt auf jener Seite auch noch das Auftauchen des Sägeblatts 36, bevor der Vorschub des Rohbretts wieder einsetzt. Selbstverständlich sind jeweils vor dem Schneiden der Längskanten der Teilstücke 20 durch Vorschub des Rohbretts 10 die zur Erzeugung der Endkanten dienenden Sägeblätter 38 bzw. 40 wieder seitlich nach außen in ihre Neutralstellung zurückgezogen worden.

Während des nachfolgenden Vorschubs des Rohbretts schneiden beide Sägeblätter 36 gleichzeitig, wobei sie jeweils auf den erforderlichen Winkel relativ zur Vorschubrichtung eingestellt sind und wobei die Antriebe 30 die Sägenschlitten mit der notwendigen Geschwindigkeit quer zur Vorschubrichtung verschieben. Die Vorschubbewegung kommt zum Halt, wenn die in Vorschubrichtung voreilende Endkante der beiden nebeneinander ausgesägten Teilstücke 20 an das betreffende Sägeblatt 36 gelangt. Damit ist die eine Längskante beendet, das Sägeblatt 36 wird nach unten bis unterhalb der Oberfläche des Sägetischs 22 zurückgezogen, und unter Beibehaltung der Drehwinkelstellung mit Bezug auf die senkrechte Achse 34 wird das Sägeblatt 40 von der Seite her einwärts zum hinteren Ende der Längskante vorgeschoben, wobei die hintere Endkante des zuerst ausgeschnittenen Teilstücks 20 erzeugt wird. Diese fällt mit einer unbesäumten Längskante und drei gesägten Seitenkanten heraus.

Nach dem Zurückziehen des Sägeblatts 40 seitlich nach außen in die Neutralstellung wird der Vorschub des Rohbretts fortgesetzt, bis entweder auf der anderen Rohbretthälfte das noch in Eingriff befindliche Sägeblatt 36 an das Ende des dortigen Teilstücks 20 gelangt oder auf der Seite, wo bereits das erste Teilstück 20 ausgesägt worden ist, die vordere Endkante des nächsten auszusägenden Teilstücks das Sägeblatt 38 erreicht.

In entsprechender Weise wird das Aussägen der weiteren Teilstücke fortgesetzt, wobei jeweils die vorauseilenden Endkanten durch die Sägeblätter 38 und die hinteren Endkanten durch die Sägeblätter 40 geschnitten werden. Die Sägeblätter 36 schneiden jeweils nur die inneren Längskanten der Teilstücke 20. Die ungleichmäßige äußere Seitenkante wird im nachfolgenden Arbeitsgang beim Zerlegen der Teilstücke 20 in kleinere Kanteln auf einer Mehrblattsäge abgetrennt.

Es ist ohne weiteres ersichtlich, daß an jedem Sägenschlitten 24, 26 noch ein viertes Sägeblatt parallel zum Sägeblatt 36 und mit einstellbarem Abstand zu diesem drehbar gelagert sein kann, das zusammen mit dem Sägeblatt 36 in die Neutralstellung nach unten zurückgezogen und zum Sägeeinsatz nach oben vorgeschoben wird, so daß beide Längskanten der Teilstücke 20 gleichzeitig erzeugt werden.

Es ist weiterhin erkennbar, daß sich das erfindungsgemäße Verfahren auch nur mit einem der beiden in Querrichtung schneidenden Sägeblätter 38 und 40 in Verbindung mit dem Längssägeblatt 36 ausführen läßt. Vorzugsweise benutzt man dann nur das in Vorschubrichtung hinter dem Längssägeblatt 36 liegende Quersägeblatt 38. Der Abfall entsteht in diesem Fall erst hinter dem Längssägeblatt 36. Alternativ kann der Sägenschlitten um 180° schwenkbar sein und das Quersägeblatt 38 die vordere Endkante eines Teilstücks 20 hinter dem Längssägeblatt 36 und die hintere Endkante vor diesem schneiden.

In einer noch einfacheren Ausführung wird nur mit den beiden Sägeblättern 36 gearbeitet, die abwechselnd auf ihrer jeweiligen Seite die Längs- und Querkanten der Teilstücke 20 schneiden. Die Sägeblätter müssen dann allerdings mit Bezug auf die Achse 34 um 90° schwenkbar sein, wobei normalerweise der Schwenkbewegung aus der Längs- in die Querrichtung eine seitliche Verschiebung nach außen durch den Antrieb 30 vorauszugehen hat, damit das Sägeblatt beim Schwenken nicht gegen das andere, noch in Längsrichtung stehende Sägeblatt 36 stößt.

Wenn zwei Sägeblätter 36 nebeneinander in Längsrichtung sägen, ist es zweckmäßig, sie in einer solchen Weise mit ihrer Antriebswelle zu verbinden, daß die Verbindungsmittel nicht oder nur möglichst wenig über die dem Antrieb gegenüberliegende Seitenfläche des Sägeblatts vorstehen, damit beide Sägeblätter dicht nebeneinander schneiden können.

Als weitere Besonderheit ist zu beachten, daß der oder die Sägenschlitten 24, 26 neben bzw. zwischen den Sägeblättern 36, 38, 40 eine das Rohbrett stützende Oberfläche auf dem Niveau der Oberfläche des Sägetischs 22 haben sollten. Wegen der Querverschiebung der Sägenschlitten 24, 26 während des Vorschubs des Rohbretts sind durch geeignete Wahl des Oberflächenmaterials und/oder die Gestaltung der Oberfläche der Sägenschlitten sowie weiterhin durch die Begrenzung des Andrucks des Rohbretts für möglichst geringe Reibung zu sorgen. So können z.B. in die Oberseite der Sägenschlitten 24, 26 nach oben vorstehende Kugeln leicht drehbar eingelassen sein, auf welchen das Rohbrett abgestützt wird.

Die bei den vorstehend beschriebenen Vorrichtungen zum Einsatz kommenden verschwenkbaren Sägenschlitten sind verhältnismäßig schwere und teure Einheiten. In einer sehr einfachen Ausführung läßt sich das vorgeschlagene Verfahren auch mit einem feststehenden Sägentisch mit einer in Längsrichtung.verfahrbaren und unter die Tischfläche zurückziehbaren ersten Kreissäge sowie einer in Querrichtung verfahrbaren, zweiten Kreissäge, die von der Seite bis in die Schneidebene der in Längsrichtung verfahrbaren ersten Kreissäge vorfahrbar ist, realisieren. Es wird jeweils dasjenige Teilstück 20 durch einen Längsschnitt und anschließend einen Querschnitt ausgesägt, das in Vorschubrichtung zuerst endet. Vor dem Sägevorgang wird das Rohbrett so ausgerichtet, daß die innere Längskante des auszusägenden Teilstücks 20 in der senkrechten Schneidebene der in Längsrichtung verfahrbaren Kreissäge liegt und diese durch Verfahren in Längsrichtung vom vorderen Ende des Rohbretts aus den gesamten Längsschnitt ausführen kann. In dieser ausgerichteten Lage, in der die Endpunkte der Vorschubwege beider Sägen auf den inneren hinteren Eckpunkt des auszusägenden Teilstücks fallen, wird das Rohbrett festgelegt, dann durch die erste Säge der Längsschnitt ausgeführt und anschließend, nach dem Zurückziehen dieser Kreissäge unter die Oberfläche des Sägetischs mittels der zweiten Kreissäge durch einen rechtwinklig zum Längsschnitt gerichteten Querschnitt die Endkante des Teilstücks 20 geschnitten. Zur Erleichterung des Ausrichtens des Rohbretts auf die Schneidebene der in Längsrichtung verfahrbaren Säge ist ein Greifer vorgesehen, der das hintere Ende des Rohbretts erfaßt und sowohl zur Säge hin vorschiebbar als auch seitlich auslenkbar ist. In der Nähe vor den Sägen befindet sich ein Auflager für das Rohbrett, welches einerseits heb- und bis in eine Neutralstellung absenkbar ist, in der das Rohbrett auf dem Sägetisch zur Auflage kommt, andererseits entsprechend der Auslenkbewegung des Greifers um eine senkrechte Achse drehbar ist. Vorzugsweise ist das Auflager außerdem in Querrichtung verschieblich und erlaubt ein reibungsarmes Gleiten des Rohbretts beim Vorschub. Die Ausrichtung und das schrittweise Vorschieben und Festlegen des Rohbretts können manuell oder automatisch gesteuert werden.

## Patentansprüche

1. Verfahren zur Weiterverarbeitung von unbesäumten Rohbrettern, wobei vor dem Zerlegen eines Rohbretts (10) in längliche, rechteckige Teilstücke (20) ein durch einen Rechner auszuwertendes Bild des Rohbretts (10) aufgenommen und unter Berücksichtigung seiner Maße und Materialeigenschaften ein Schnittmuster berechnet wird, mit dessen Daten eine die Teilstücke (20) markierende oder aussägende maschinelle Vorrichtung (22 - 48) gesteuert wird, **dadurch gekennzeichnet, daß** die auszusägenden Teilstücke (20) mit Bezug auf das Rohbrett (10) zwei unregelmäßige Längsreihen bilden, indem sie jeweils mit ihren Längskanten angenähert parallel zum benachbarten Abschnitt der unbesäumten Längskante des Rohbretts (10) liegen und mit individuellen Längen und Breiten die nutzbare Fläche des Rohbretts (10) angenähert überdekken.

2. Verfahren nach Anspruch 1, **dadurch gekennzeichnet, daß** zum Aussägen der Teilstücke (20) in einem ersten Arbeitsvorgang außer Querschnitten zur Erzeugung ihrer Enden nur ein einziger Längsschnitt ausgeführt wird, welcher jeweils der inneren Längskante des zuerst endenden Teilstücks (20) der beiden in Querrichtung des Rohbretts (10) nebeneinander liegenden Teilstücke (20) folgt.

3. Verfahren nach Anspruch 1, **dadurch gekennzeichnet, daß** zum Aussägen der Teilstücke (20) in einem ersten Arbeitsvorgang außer Querschnitten zur Erzeugung ihrer Enden zwei Längsschnitte gleichzeitig ausgeführt werden, welche den inneren Längskanten der Teilstücke (20) beider Reihen folgen.

4. Verfahren nach Anspruch 1, **dadurch gekennzeichnet, daß** beim Aussägen der Teilstücke (20) vier Längsschnitte gleichzeitig ausgeführt werden, welche den Längskanten der Teilstücke beider Reihen folgen.

5. Verfahren nach einem der Ansprüche 2 bis 4, **dadurch gekennzeichnet, daß** ausgesägte Teilstücke (20) des Rohbretts in einem weiteren Arbeitsgang zu Kanteln zersägt werden.

6. Verfahren nach einem der Ansprüche 2 bis 5, **dadurch gekennzeichnet, daß** während des Sägens der Längsschnitte das Rohbrett (10) nur geradlinig in Längrichtung bewegt wird.

7. Verfahren nach einem der Ansprüche 2 bis 6, **dadurch gekennzeichnet, daß** ein Teil der Längsschnitte durch vertikale Bewegung von rotierenden Kreissägeblättern (36) ausgeführt wird.

8. Verfahren nach einem der Ansprüche 2 bis 7, **dadurch gekennzeichnet, daß** die Querschnitte zur Erzeugung der vorderen Enden der Teilstücke (20) an einer Stelle ausgeführt werden, die sich in Vorschubrichtung des Rohbretts mit Zwischenabstand hinter der Stelle befindet, wo die Querschnitte zur Erzeugung der hinteren Enden der Teilstücke (20) ausgeführt werden.

9. Verfahren nach Anspruch 7 oder 8, **dadurch gekennzeichnet, daß** während und unmittelbar nach einem Querschnitt zur Erzeugung des vorderen Endes eines Teilstücks (20) das Rohbrett (10) ortsfest gehalten wird, bis durch vertikale Bewegung eines rotierenden Kreissägeblatts (36) eine vordere Ecke des Teilstücks (20) erzeugt ist.

10. Verfahren nach Anspruch 1 oder 2, **dadurch gekennzeichnet, daß** vor dem Sägen eines Längsschnittes das Rohbrett (10) auf die gleichbleibende, senkrechte Schneidebene einer Säge ausgerichtet und während des Sägens ortsfest gehalten wird.

11. Vorrichtung zur Durchführung des Verfahrens nach einem der Ansprüche 1 bis 10 mit einer optischen Einrichtung zur bildlichen Erfassung eines unbesäumten Rohbretts (10), einem Rechner zur Berechnung eines Schnittmusters und einer mechanischen Einrichtung zum Aussägen von rechteckigen Teilstücken (20) entsprechend dem Schnittmuster, **dadurch gekennzeichnet, daß** in dem berechneten Schnittmuster die auszusägenden Teilstücke (20) mit Bezug auf das Rohbrett (10) in zwei unregelmäßigen Längsreihen angeordnet sind, wobei sie jeweils mit ihren Längskanten angenähert parallel zum benachbarten Abschnitt der unbesäumten Längskante des Rohbretts (10) liegen und mit individuellen Längen und Breiten die nutzbare Fläche des Rohbretts (10) angenähert überdekken, und daß die Einrichtung zum Sägen eine Fördereinrichtung zum geradlinigen Vorschub eines Rohbretts (10) in Längsrichtung und wenigstens einen Sägenschlitten (24, 26) aufweist, der gesteuert quer zur Vorschubrichtung verfahrbar und um eine senkrechte Achse (34) schwenkbar ist und an dem wenigstens eine Kreissäge (36) während des Sägens vertikal bewegbar gelagert ist.

12. Vorrichtung nach Anspruch 11, **dadurch gekennzeichnet, daß** an dem Sägenschlitten (24, 26) wenigstens eine Kreissäge (36) zur Ausführung von Längsschnitten vertikal bewegbar und wenigstens eine Kreissäge (38, 40) zur Ausführung von Querschnitten vertikal und/oder horizontal bewegbar gelagert sind.

13. Vorrichtung nach Anspruch 11 oder 12, **dadurch gekennzeichnet, daß** zum Aussägen der Teilstücke (20) jeder der beiden Längsreihen je ein Sägenschlitten (24, 26) vorhanden ist.

14. Vorrichtung nach Anspruch 12 oder 13, **dadurch gekennzeichnet, daß** die Kreissäge (38) für Querschnitte in Vorschubrichtung hinter der Kreissäge (36) für Längsschnitte angeordnet ist.

15. Vorrichtung nach Anspruch 13, **dadurch gekennzeichnet, daß** an jedem der beiden Sägenschlitten (24, 26) eine Kreissäge (36) für Längsschnitte und in Vorschubrichtung unmittelbar vor und hinter dieser je eine Kreissäge (38, 40) für Querschnitte gelagert sind.

16. Vorrichtung nach Anspruch 13, **dadurch gekennzeichnet, daß** an jedem der beiden Sägenschlitten (24, 26) zwei parallel angeordnete Kreissägen (36) für Längsschnitte gelagert sind, deren Abstand einstellbar ist.

17. Vorrichtung nach einem der Ansprüche 11 bis 15, **dadurch gekennzeichnet, daß** an jedem Sägenschlitten (24, 26) die Kreissäge (36) zum Schneiden der inneren Längskanten der Teilstücke (20) im vertikal hochgefahrenen Zustand und wenigstens eine Kreissäge (38, 40) für Querschnitte im seitlich eingefahrenen bzw. vertikal hochgefahrenen Zustand in Draufsicht eine rechtwinklige Ecke bilden.

18. Vorrichtung nach Anspruch 12, **dadurch gekennzeichnet, daß** die Kreissäge (38, 40) bei der Ausführung von Querschnitten am Sägenschlitten (24, 26) in Vorschubrichtung zusammen mit dem Rohbrett (10) verfahrbar ist.

## Claims

1. A method of further processing untrimmed rough boards, wherein before a rough board (10) is broken down into elongate, rectangular sections (20) an image is taken of the rough board (10) to be evaluated by a computer and taking into account its size and material properties a cutting pattern is calculated, the data of which is used to control a mechanical device (22 to 48) marking or sawing the sections (20) therefrom, **characterised in that** the sections (20) to be sawn out form two irregular longitudinal rows in relation to the rough board (10) **in that** in each case they are situated with their longitudinal edges approximately parallel to the adjacent portion of the untrimmed longitudinal edge of the rough board (10) and with individual lengths and widths they approximately cover the usable surface of the rough board (10).

2. A method according to Claim 1, **characterised in that** for sawing out the sections (20), in a first operation, except for cross-cuts to form their ends, only a single longitudinal cut is made which in each case follows the inner longitudinal edge of the first ending section (20) of the two sections (20) situated adjacent one another in the transverse direction of the rough board (10).

3. A method according to Claim 1, **characterised in that** for sawing out the sections (20), in a first operation, except for cross-cuts to form their ends, two longitudinal cuts are effected simultaneously which follow the inner longitudinal edges of the sections (20) of both rows.

4. A method according to Claim 1, **characterised in that** when sawing out the sections (20) four longitudinal cuts are made simultaneously which follow the longitudinal edges of the sections of both rows.

5. A method according to any one of Claims 2 to 4, **characterised in that** the sawn-out sections (20) of the rough board are sawn in a further operation to form scantlings.

6. A method according to any one of Claims 2 to 5, **characterised in that** during the sawing of the longitudinal cuts the rough board (10) is moved only in a straight line in the longitudinal direction.

7. A method according to any one of Claims 2 to 6, **characterised in that** a part of the longitudinal cuts is made by vertical movement of rotating circular saw blades (36).

8. A method according to any one of Claims 2 to 7, **characterised in that** the cross-cuts for forming the front ends of the sections (20) are made at a location which in the feed direction of the rough board is situated with intermediate spacing behind the location where the cross-cuts are made to form the rear ends of the sections (20).

9. A method according to Claim 7 or 8, **characterised in that** during and immediately after a cross-cut to form the front end of a section (20) the rough board (10) is held stationary until, by vertical movement of a rotating circular saw blade (36), a front edge of the section (20) is formed.

10. A method according to Claim 1 or 2, **characterised in that** before the sawing of a longitudinal cut the rough board (10) is aligned with the constant perpendicular cutting plane of a saw and is held stationary during the sawing.

11. An apparatus for carrying out the method according to any one of Claims 1 to 10 with an optical device for recording an image of an untrimmed rough board (10), with a computer for calculating a cutting pattern and with a mechanical device for cutting out rectangular sections (20) in accordance with the cutting pattern, **characterised in that** in the calculated cutting pattern the sections (20) to be sawn out are arranged in two irregular longitudinal rows in relation to the rough board (10), wherein in each case they are situated with their longitudinal edges approximately parallel to the adjacent portion of the untrimmed longitudinal edge of the rough board (10) and with individual lengths and widths they approximately cover the usable surface of the rough board (10), and **in that** the device for sawing has a conveying means for feeding in a straight line a rough board (10) in a longitudinal direction, and has at least one saw blade carriage (24,26) which can travel in a controlled manner transversely to the feed direction and is pivotable about a vertical axis (34) and on which at least one circular saw (36) is mounted to move vertically during the sawing operation.

12. An apparatus according to Claim 11, **characterised in that** at least one circular saw (36) is vertically movable on the saw blade carriage (24,26) so as to make longitudinal cuts and at least one circular saw (38,40) is mounted for vertical and/or horizontal movement thereon so as to make cross-cuts.

13. An apparatus according to Claim 11 or 12, **characterised in that** a respective saw blade carriage (24,26) is provided for cutting out sections (20) from each of the two longitudinal rows.

14. An apparatus according to Claim 12 or 13, **characterised in that** the circular saw (38) for cross-cuts is disposed in the feed direction behind the circular saw (36) for longitudinal cuts.

15. An apparatus according to Claim 13, **characterised in that** on each of the two saw blade carriages (24,26) there is mounted a circular saw (36) for longitudinal cuts and a respective circular saw (38,40) for cross-cuts is mounted immediately in front of and behind it in the feed direction.

16. An apparatus according to Claim 13, **characterised in that** two circular saws (36) for longitudinal cuts, which are arranged parallel and the distance apart of which is adjustable, are mounted on each of the two saw blade carriages (24,26).

17. An apparatus according to any one of Claims 11 to 15, **characterised in that** on each saw blade carriage (24,26) the circular saw (36) for cutting the inner longitudinal edges of the sections (20) in the vertically raised position and at least one circular saw (38,40) for cross-cuts in the laterally advanced or vertically raised position in plan view form a rectangular corner.

18. An apparatus according to Claim 12, **characterised in that** when carrying out cross-cuts the circular saw (38,40) is traversable on the saw blade carriages (24,26) in the feed direction together with the rough board (10).

## Revendications

1. Procédé de transformation de planches brutes non dégrossies selon lequel, avant de débiter une planche brute (10) en pièces (20) allongées, rectangulaires, on prend une image de la planche brute (10) pour l'exploiter dans un calculateur et, en tenant compte de ses dimensions et des propriétés de la matière, on calcule un modèle de coupe et à l'aide des données de celui-ci on commande un dispositif (22-48) de machine qui marque ou découpe les pièces (20),
**caractérisé en ce que**
les pièces (20) à découper forment deux rangées longitudinales irrégulières par rapport à la planche brute (10) en plaçant leurs arêtes longitudinales sensiblement parallèlement aux segments voisins de l'arête longitudinale non dégrossie de la planche brute (10), et pour que la surface utile de la planche brute (10) recouvre sensiblement leur longueur et largeur individuelle.

2. Procédé selon la revendication 1,
**caractérisé en ce que**
pour découper les pièces (20) au cours d'une premiere opération, en dehors de la coupe transversale pour former les extrémités, on effectue seulement une coupe longitudinale qui suit chaque fois l'arête longitudinal intérieure de la pièce (20) qui se termine en premier des deux pièces (20) juxtaposées dans la direction transversale de la planche brute (10).

3. Procédé selon la revendication 1,
**caractérisé en ce que**
pour scier les pièces (20), au cours d'une première opération, en dehors de la coupe transversale pour former les extrémités, on réalise simultanément deux coupes longitudinales qui suivent les arêtes longitudinales intérieures des pièces (20) de deux rangées.

4. Procédé selon la revendication 1,
**caractérisé en ce que**
pour le sciage des pièces (20), on effectue simultanément quatre coupes longitudinales qui suivent les arêtes longitudinales des pièces de deux rangées.

5. Procédé selon l'une quelconque des revendications 2 à 4,
**caractérisé en ce que**
la pièce partielle (20) découpée à la scie dans la planche brute est sciée au cours d'une autre opération pour obtenir des carrelets.

6. Procédé selon l'une quelconque des revendications 2 à 5,
**caractérisé en ce que**
pendant le sciage de la coupe longitudinale, la planche (10) est seulement déplacée suivant un mouvement rectiligne dans la direction longitudinale.

7. Procédé selon l'une quelconque des revendications 2 à 6,
**caractérisé en ce qu'**
une partie des coupes longitudinales est effectuée par un mouvement vertical de lame de scie circulaire rotative (36).

8. Procédé selon l'une quelconque des revendications 2 à 7,
**caractérisé en ce que**
pour former les extrémités avant des pièces (20) les coupes transversales sont effectuées à l'endroit qui dans la direction d'avancement de la planche brute se trouve à une distance intermédiaire derrière l'emplacement où on effectue la coupe transversale pour former les extrémités arrière des pièces (20).

9. Procédé selon l'une quelconque des revendications 7 ou 8,
**caractérisé en ce que**
pendant ou immédiatement après une coupe transversale pour former l'extrémité avant d'une pièce (20), on maintient fixe la planche brute (10) jusqu'à ce que par un mouvement vertical d'un disque de scie rotative (36), on formeun coin avant de la pièce (20).

10. Procédé selon l'une quelconque des revendications 1 ou 2,
**caractérisé en ce qu'**
avant de scier une coupe longitudinale, on aligne la planche brute (10) sur le plan de coupe constant vertical d'une scie et on maintient la planche brute de manière fixe pendant le sciage.

11. Dispositif pour la mise en oeuvre du procédé selon l'une quelconque des revendications 1 à 10, comportant une installation optique pour saisir l'image d'une planche brute (10) non dégrossie, un calculateur pour calculer un modèle de coupe et une installation mécanique pour scier des pièces (20) rectangulaires selon le modèle de coupe,
**caractérisé en ce que**
dans le modèle de coupe tel que décrit, les pièces (20) à scier sont installées dans des rangées longitudinales irrégulières par rapport à la planche brute (10),
ces pièces étant situées chaque fois avec leurs arêtes longitudinales sensiblement parallèles aux segments voisins de l'arête longitudinale non dégrossie de la planche brute (10), et leur longueur et largeur individuelle couvrent pratiquement la surface utile de la planche brute (10), et
l'installation pour scier comporte une installation de transfert pour faire avancer en ligne droite une planche brute (10) dans la direction longitudinale et au moins un chariot de sciage (24, 26) déplacé de façon commandée transversalement à la direction d'avance et pouvant pivoter autour d'un axe vertical (34) en étant muni d'au moins une scie circulaire (36) mobile verticalement pendant le sciage.

12. Dispositif selon la revendication 11,
**caractérisé en ce que**
le chariot de sciage (24, 26) comporte pour effectuer les coupes longitudinales, au moins une scie circulaire (36) mobile verticalement, et pour effectuer les coupes transversales, au moins une scie circulaire (38, 40) mobile verticalement et/ou horizontalement.

13. Dispositif selon l'une quelconque des revendications 11 ou 12,
**caractérisé par**
un chariot de sciage (24, 26) respectif pour scier les pièces (20) de chacune des deux rangées longitudinales.

14. Dispositif selon l'une quelconque des revendications 12 ou 13,
**caractérisé en ce que**
la scie circulaire (38) pour les coupes transversales est située derrière la scie circulaire (36) des coupes longitudinales, par rapport à la direction d'avancement.

15. Dispositif selon la revendication 13,
**caractérisé en ce que**
chacun des deux chariots de sciage (24, 26) est muni d'une scie circulaire (36) pour les coupes longitudinales et dans la direction d'avancée, directement devant et derrière celle-ci il y a chaque fois une scie circulaire (38, 40) pour effectuer les coupes transversales.

16. Dispositif selon la revendication 13,
**caractérisé en ce que**
chacun des deux chariots de sciage (24, 26) comporte deux scies circulaires (36) parallèles pour effectuer les coupes longitudinales, et dont la distance est réglable.

17. Dispositif selon l'une quelconque des revendications 11 à 15,
**caractérisé en ce que**
pour chaque chariot de sciage (24, 26), la scie circulaire (36) sciant les arêtes longitudinales intérieures des pièces (20), en position relevée verticalement et au moins une scie circulaire (38, 40) pour les coupes transversales, en position latérale rentrée ou relevée verticalement, forment en vue de dessus un coin rectangulaire.

18. Dispositif selon la revendication 12,
**caractérisé en ce que**
pour la réalisation de coupes transversales, la scie circulaire (38, 40) est mobile par rapport aux chariots de sciage (24, 26) dans la direction d'avancement avec la planche brute (10).
